# EUROPEAN PATENT APPLICATION

(11) **EP 3 428 753 A1**
(43) Date of publication of application: **16.01.2019**
(21) Application number: 18181872.5
(22) Date of filing: 05.07.2018
(51) Int. Cl.: G05B 19/418

(54) **AUTOMATION SYSTEM AND METHOD WITH CYCLE-BASED AND EVENT-BASED AUTOMATION DEVICES**

(30) Priority: 13.07.2017 IT 201700078781
(71) Applicant: Synesis Societa' Consortile A Responsabilita' Limitata, 22074 Lomazzo (CO) (IT)
(72) Inventor: MONTALBANO, Giuseppe, 22074 Lomazzo (CO) (IT); CAVADINI, Franco Antonio, 22074 Lomazzo (CO) (IT)
(74) Representative: Postiglione, Ferruccio

(57) **Abstract**

It is described an automation system (100) comprising: at least one intelligent automation device (1) configured to operate according to a cycle-based approach; a distributed control system (3) comprising a plurality of programmable automation devices (4) configured to operate according to an event-based approach; an interconnection device (2) connected between the distributed control system (3) and the at least one intelligent automation device (1). The interconnection device (2) is configured to: store first variable values (V1) provided by the intelligent automation device (1) and second variable values (V2) provided by the distributed control system (3); provide an event detection signal (OEV_{SIG}) to the distributed control system (3) if a value change is determined in said first variable values (V1); cyclically read said second variables values (V2) and send to the intelligent automation device (1) updated values of the second variables values (V2).

## Description

The project leading to this invention has received funding from the European Union's Horizon 2020 research and innovation program under grant agreement No 678556.

### BACKGROUND

### Technical field

The present invention relates to the field of the automation system.

### Description of the Related Art

The current trend in the automation field is to implement distributed automation systems where programmable automation devices are employed. A programmable automation device shows the possibility to interface with actuators and sensors and is provided with software procedures for interfacing with other programmable automation devices of the system, to exchange variable values.

The programmable automation device of the known distributed automation systems executes programmed logics according to an event-based approach, i.e. executing code portions only when pre-established events occur.

Moreover, the programmable automation devices support programming formalisms oriented to the implementation of distributed systems, that is to say, programming languages where the development environments allow automatic allocation of code portions on different programmable automation devices.

Despite the above-indicated trend, many pre-exiting industry plants show automation systems still configured according to a cycle-based approach and employing intelligent automation devices. Such intelligent automation devices cyclically perform a scanning of the variable values/signals so updating the output values, i.e. they operate according to a cycle-based approach. Moreover, these traditional intelligent automation devices do not support programming formalism oriented to distributed control system implementation.

Therefore, integration of event-based automation apparatuses in pre-installed cycle-based automation systems cannot be easily performed due to their configuration and operational differences: the traditional cycle-based automation system has to be replaced by a new event-based automation system.

### Brief Description of the Drawings

The Applicant observes that the replacing of pre-exiting cycle-based automation systems with event-based ones can be significantly costly and, therefore, a need for non-complex and efficient integration techniques of the two different approaches is felt in the automation field.

According to a first aspect, the present invention relates to an automation system as defined by the appended claim 1. Particular embodiments of the system are described by the dependent claims 2-8. In another aspect, the present invention relates to an interconnection device as defined by claim 9. In accordance with another aspect, the present invention relates to an automation method defined by the independent claim 10.

Further characteristics and advantages will be more apparent from the following description of a preferred embodiment and of its alternatives given as a way of an example with reference to the enclosed drawings in which:
FIG. 1 schematically shows an example of an automation system comprising an intelligent automation device, an interconnection device and a distributed control system;
FIG.2 refers to the interaction of the intelligent automation device with said interconnection device;
FIG. 3 schematically shows an example of a software development tool 7 of said distributed control system;
FIG. 4 schematically shows a particular embodiment of said interconnection device;
FIG. 5 illustrates an example of said automation system with reference to a particular control application.

### DETAILED DESCRIPTION OF EXAMPLES

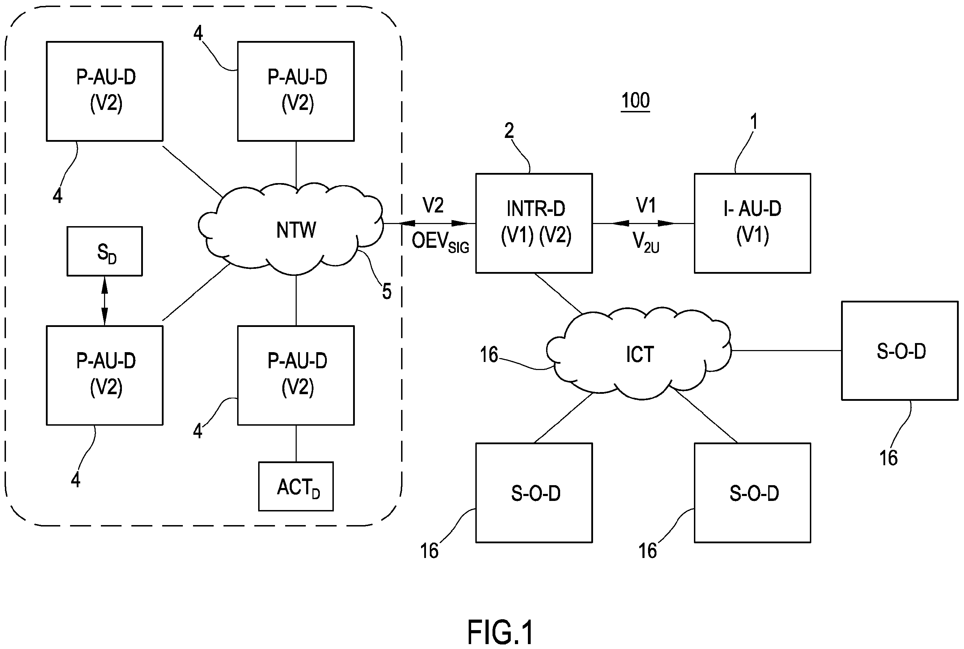

Figure 1 schematically shows an automation system 100 comprising at least one intelligent automation device 1 (I-AU-D), an interconnection device 2 and a distributed control system 3.

As an example, the automation system 100 is structured to control and operate equipments, such as machinery, processes in factories, boilers and heat-treating ovens, switching on telephone networks, steering and stabilization of ships, aircraft and other applications and vehicles with minimal or reduced human intervention. The automation can be achieved by various actuators, including, as example: mechanical, hydraulic, pneumatic, electrical and/or electronic devices.

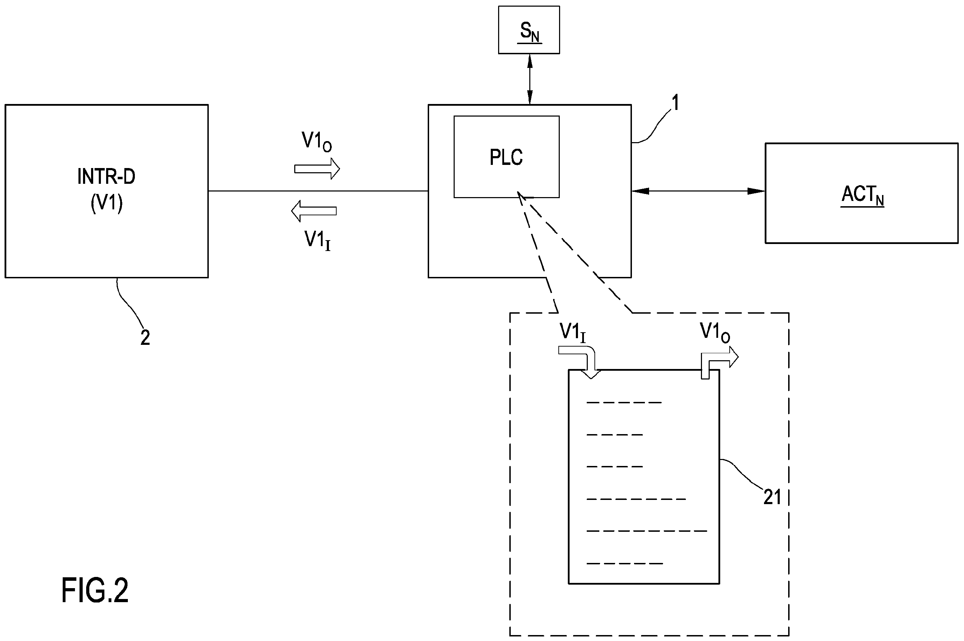

As represented in FIG. 2, the intelligent automation device 1 is a device comprising a programmable and/or configurable unit 20 adapted to control/command actuators, acquire and process values of data received from sensors, receive/send data from/to further devices (e.g. other intelligent automation devices), in accordance with the programmed/configured software logics 21.

As an example, the programmable and/or configurable unit 20 is a PLC (Programmable Logic Controller) or a soft-PLC having a suitable programmable and/or configurable unit.

The intelligent automation device 1 may include the sensors and/or the actuators that it controls and/or it can be connected to external sensors S_{N} and actuators ACT_{N} by suitable communication links (in wired and/or wireless technology), as shown in FIG. 2.

The intelligent automation device 1 is configured to operate according to a cycle-based approach with which some operation steps are cyclically repeated. Particularly, the intelligent automation device 1 executes the programmed/configured logics 21 (corresponding to software algorithms) periodically reading input variable values V1_{I} and periodically updating output variable values V1_{O}.

In detail, said cyclically repeated operation steps determine the modality interactions of the intelligent automation device 1 with the internal/external sensors, the internal/external actuators and the other devices, and affect the execution of the programmed/configured logics 21.

As an example, the cycle-based approach provides for the following steps:
- Step A: input variable updating step, wherein the input variable values V1_{I} are updated with the most recent value acquired from sensors and/or from other systems interacting with the intelligent device 1;
- Step B: execution step, wherein the programmed/configured logics 21 are executed basing the execution on the variable values V1_{I} updated in Step A;
- Step C: output variable updating step, wherein from the analysis of the results of the execution of step B the values of the output variables V1_{O} are updated and used to command the actuators and/or other devices,
- Step D: inactive step, which is an idle status assumed by the intelligent automation device 1 to wait for the start of a subsequent step, according a pre-defined periodicity.

Particularly, it is observed that the above-indicated steps are periodically repeated with an order that can be variable, but the repetition of the step A is made according to a fixed period T_{A} and the repetition of the step C is made according to a fixed period T_{B}.

As an example, the intelligent automation device 1 operates according the international standards IEC-61131 and PLCOpen.

It is further noticed that the input variable values V1_{I} and the output variable values V1_{O} can be used to monitor and/or influence the behavior (logical and or physical) of the intelligence automation device 1. It is also observed that input variable values V1_{I} and the output variable values V1_{O} represent a software interface of the intelligent automation device 1.

The distribute control system 3 includes a plurality of programmable automation device 4 connected each other by an automation network 5 (NTW).

Each programmable automation device 4 is a device adapted to control/command actuators, acquire and process values of data received from sensors, receive/send data from/to further devices (e.g. other intelligent automation devices), in accordance with the programmed/configured software logics.

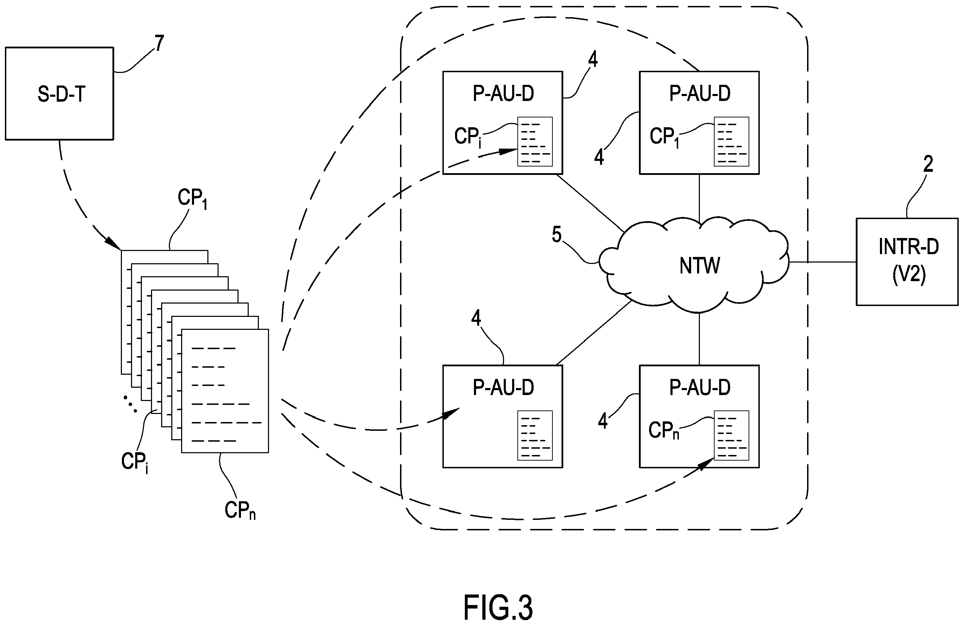

Each programmable automation device 4 may include the sensors and/or the actuators and/or it is connected to further external sensors S_{D} and/or actuators ACT_{D} (FIG. 3) by suitable communication links (in wired and/or wireless technology).

Each programmable automation device 4 supports configuration and or programming by an event-based approach, which allows execution of specific instruction code portions only when predefined events occur and/or are generated.

In other words, the instruction code portions are executed only when specific events that have been predefined by the programmers occur and according to a sequencing depending on the event succession during program execution. Each code portion can generate events that cause the execution other codes.

Each programmable automation device 4 is configurable/programmable by a human-machine interface integrated into the programmable automation device 4 or connectable to the programmable automation device 4 via a network connection.

Particularly, as shown in FIG. 3, the distributed control system 3 may include a software development tool 7 (S-D-T) which is a development environment allowing to implement a distributed control application. The software development tool 7 is adapted to configure a plurality of programmable automation devices 4 assigning to each programmable automation device 4 a respective code portion CP₁-CPₙ. Moreover, the software development tool 7 is also adapted to configure the necessary data exchange between the programmable automation devices 4 in accordance with the functions of each device 4.

The programmable automation devices 4 of the distributed control system 3 are provided with an onboard software or firmware which enable the software development tool 7 to allocate part (or the totality) of the overall automation software application to each single device (e.g. the code portions CP₁-CPₙ).

Each single programmable automation device 4 supports a well defined set of functionalities and the software development tool 7 can be configured (through manual or automatic mechanisms) to manage appropriately the development of the control application and the following allocation to the different automation devices 4.

The distributed control system 3 operates according event-based standards, such as an example, the international standard IEC-61499.

It is observed that event-based approach is different from the cycle-based approach supported by the intelligent automation device 1 and the former allows better execution efficiency and reduced amount of data exchanged over the automation network 5 (basically, data values are transferred only when their value changes).

Moreover, contrary to the programmable automation devices 4, the intelligent automation device 1 does not support programming formalisms oriented to the implementation of distributed systems, that is to say, programming languages where the development environments allow automatic allocation of code portions on different programmable automation devices.

The interconnection device 2 is connected (via wireless and/or wired links) to the distributed control system 3 and the intelligent automation device 1 and is configured to enable interaction of the intelligent automation device 1 with the programmable automation devices 4 of the distributed control system 3.

The interconnection device 2 is adapted to store first variable values V1 provided by the intelligent automation device 1 and second variable values V2 provided by the distributed control system 3 (FIG 1). Moreover, the interconnection device 2 is configured to provide an event detection signal OEV_{SIG} to the distributed control system 3 if a value change is determined in said first variable values V1. The interconnection device 2 is also configured to cyclically scan said second variable values V2 and send to the intelligent automation device 1 updated values V2u of the second variables values.

Particularly, as will be further clarified later, the interconnection device 2 allows the distributed control system 3 interacting with the intelligent automation device 1, *via* the interconnection device 2, according to an event-based approach.

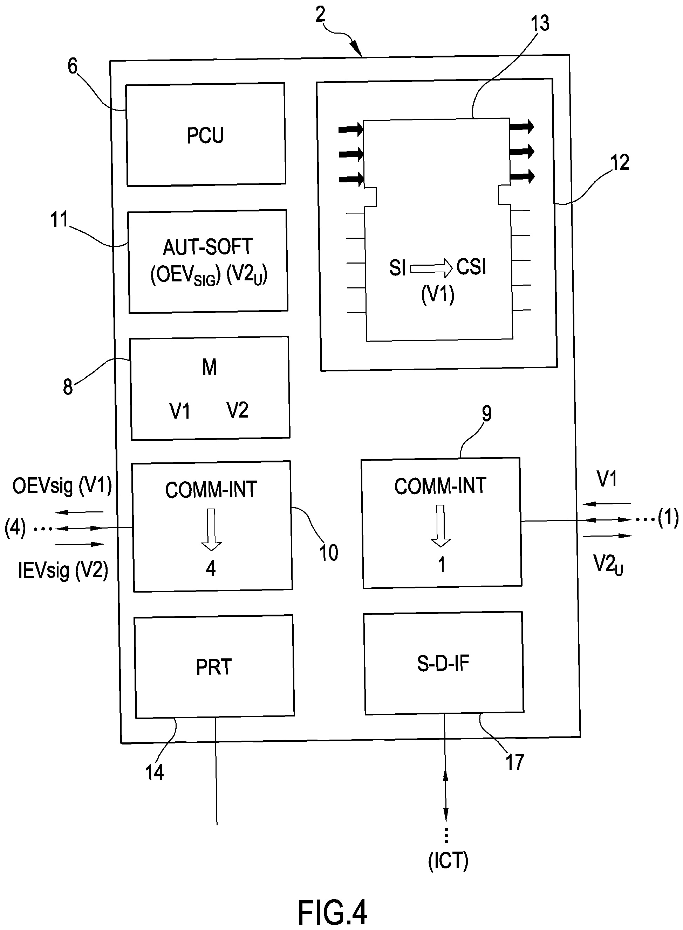

According to an example, the interconnection device 2 (FIG. 4) comprises a programmable/configurable control unit 6 (PCU), which can be, as an example, a CPU, a SOC (system on chip) or an FPGA. The interconnection device 2 is also provided with memory 8 (M) configured to store (temporally or permanently), inter alias, the first variable values V1 provided by the intelligent automation device 1 and second variable values V2 provided by the distributed control system 3.

Particularly, the interconnection device 2 includes a first communication interface module 9 (COMM-INT) structured to allow communications with the intelligent automation device 1. As an example, the first communication interface module 9 allows communications according to the Modbus TCP/IP protocol, which is employed by the intelligent automation device 1.

Moreover, the interconnection device 2 preferably includes a second communication interface module 10 (COMM-INT) structured to allow communications with the programmable automation devices 4.

It is observed that the interconnection device 2 can be, preferably, configured by the software development tool 7 also employed for the programmable automation devices 4 of the distributed control system 3.

Particularly, the interconnection device 2 comprises an automation runtime software module 11 (AUT-SOFT) for distributed control applications, which makes the interconnection device 2 to behave as a programmable automation device and enable it to cooperate with the other programmable automation devices 4 of the distributed control system 3 with event-based mechanisms.

The automation runtime software module 11 can be configured to manage the interactions between the programmable automation devices 4 and the intelligent automation device 1.

Particularly, the automation runtime software module 11 is configured to generate the event detection signal OEV_{SIG} that is sent to the distributed control system 3 (via the second communication interface module 10) if a value change is determined in the first variable values V1 of the intelligent automation device 1 stored in the memory 8.

It is observed that since the interconnection device 2 can be configured to behave as a programmable automation device, the same interconnection device 2 could manage the event detection signal OEV_{SIG} and the corresponding event.

Moreover, the automation runtime software module 11 is configured to cyclically scan the second variable values V2 associated with the programmable automation device 4 and send (particularly, via the first communication interface module 9), or to make available, to the intelligent automation device 1 updated values V2u of the second variables values V2.

Particularly, the automation runtime software module 11 can be a plain software stored on a persistent memory (e.g. part of the memory 8), such as: EPROM, flash memory, SSD, hard-disk or a firmware.

Preferably, the interconnection device 2 is also provided with a conversion representation module 12 structured to represent the software interface SI (e.g. the first variables V1, including input V1_{I} and output V1_{O} values) exposed by the intelligent automation device 1 and provide a converted software interface CSI, which is expressed according to a formalism employed by the distributed control system 3.

The conversion representation module 12 includes, as an example, a file 13 describing the converted software interface CSI. The conversion representation module 12 can be embedded into the automation runtime software module 11.

The conversion representation module 12 is employable by the software development tool 7 through appropriate (automatic and/or manual) software mechanisms.

As an example, the conversion representation module 12 can be represented through a function block (FB) formalism of the standard IEC-61499.

In detail, the file 13 provides:
- a description of the data type for each variable (or quantity) exchanged through that software interface SI (as an example: integer, real, .., etc.);
- the explicit or implicit digital representation associated to that data type (as for example: 1byte, 4bytes, single precision according to the standard IEEE754) .

Preferably, the conversion representation module 12 allows describing additional information associated to each single variable accessible through it. As an example, the additional information comprise: an identification value, a text name, a measure unit, a scale factor, a min or max range value, a comment, a semantic information describing characteristics of the system controlled by the automation device (e.g. speed of a joint, position of an axis) and/or xml structured data.

Optionally, the interconnection device 2 is provided with one or more industrial fieldbus ports 14 (PRT) to connect additional programmable automation devices, such as an a example: Ethercat, Sercos III, mechatronlink III, CAN, Profinet ports.

It is observed that a control application of the whole automation system 100 can be developed (as an example, using the software development tool 7 - FIG. 3) according to an event-based approach, considering the combination of the interconnection device 2 and the intelligent automation device 1 as a programmable automation device, which is part of the distributed control system 3.

Particularly, an event-based code portion Ci associated with the control of the intelligent programmable device 1 can be stored into the interconnection device 2 (i.e. accessible by the automation runtime software 11, FIG. 4) according to a distributed methodology.

The variable description provided by the conversion representation module 12 allows the software developer to perform programming/configuration of the intelligent automation device 1 in accordance with the formalism of a distributed control system.

The intelligent automation device 1 itself still operates as a cycle-based device, in accordance with suitable algorithms and logic stored in is programmable/configurable unit 20.

The control application implemented by the automation system 100 includes, as an example, the reading of variable values from sensor S_{D} and S_{N} and the control commands of the actuators ACT_{N} and ACT_{D}.

It is observed that the interconnection device 2 can be a separated device as shown in the drawing or can be a software module integrated in one of the other devices of the automation system 100.

Reference is now made to an example of operation of the interconnection device 2.

The interconnection device 2 cyclically scans the status of the first variable values V1 which have been received at the first communication interface 9 from the intelligent automation device 1 and stored in a suitable memory area of the memory 8. Particularly, the cyclical scan made by the interconnection device 2 is ideally performed at the same frequency of the cycle implemented by the intelligent programmable device 1.

The interconnection device 2 analyses the stored first variable values V1 and generates an event if a value change is detected. The generation of the event includes the generation of the event detection signal OEV_{SIG} (e.g. carrying the changed value) which is sent to the distributed control system 3 *via* the second communication interface 10.

The event generated by the interconnection device 2 can be processed by a control application implemented by the distributed control system 3.

The above-indicated steps clarify the communication from the intelligent automation device 1 towards the distributed control system 3.

The following operation steps refer to the communication from the distributed control system 3 towards the intelligent automation device 1.

The interconnection device 2 updates the content of another area of the memory 8 when predefined input events occur in the distributed control system 3.

Particularly, an input event is signaled by an input event signal IEV_{SIG} received at the second communication interface 10 (FIG. 4). The event signal IEV_{SIG} can indicate, as an example, updated values V2_{U} of one or more of the second variable values V2. The updated second variable values V2_{U} associated to the input events are stored in a suitable area of the memory 8.

The interconnection device 2 cyclically reads (in accordance with the automation runtime software module 11) the updated second variable values V2_{U} stored in the memory 8. Moreover, the interconnection device 2 sends the updated second variable values V2_{U} (particularly, a selected set of such values that are of interest for the automation logics) to the intelligent automation device 1, by means of the first communication module 9.

Preferably, as shown in FIG. 1, the interconnection device 2 is also configured to implement an interconnection of the intelligent automation device 1 (and particularly also the distributed control system 3) with an ICT (Information and Communications Technology) network 15 operating according to a service oriented architecture and provided with service-oriented devices 16 (S-O-D).

As it is known, service-oriented architecture (SOA) is a type of software design where services are provided to the other components by application components, through a communication protocol over a network. By the term service-oriented device, it is here meant an electronic device capable of asking other electronic devices for the execution of a service by means of a communication protocol.

Particularly, as shown in FIG. 4, the interconnection device 2 is provided with a service-oriented interface module 17 (S-O-IF) configured to enable a hosting of services to respond to external requests coming from the ICT network 15 and, furthermore, that can interact with control logic implemented within the automation runtime software module 11 (i.e. within the distributed control system 3). By the term "Hosting of services", it is here meant the capability to run a software that offers one or more services to one or more service-oriented device via a communication network.

A preferred embodiment of the service-oriented interface module 17 makes possible to the developer of the automation software application to customize services that the interconnection device 2 can expose to the service-oriented devices 16 connected to the ICT network 15.

The interconnection device 2 enables the interaction and communications between the services it hosts and the control software configured in the distributed control system 3 in which it is integrated.

The service-oriented interface module 17 can be configured, as an example, by the software development tool 7 used to configure the distributed control application allocated in the interconnection device 2. In accordance with another example, the service-oriented interface module 17 can be also configured through another development environment used specifically for the set-up/configuration of the services, or another software tool.

Such services exposed by the interconnection device 2 can include, as an example, the reading from the ICT network 15 of variable values associated with the programmable automation devices 4 and/or the intelligent automation device 1. This service can also include the leverage of the variable description as represented, as an example, by the conversion representation module 12.

Particularly, one of the services can provide the possibility of modify operational parameters (i.e. variables) of the programmable automation devices 4 and/or the intelligent automation device 1 by an authorized operator connected to the ICT network 15.

Moreover, as an example, the interconnection device 2 can host a software model of the apparatuses (actuators and sensors) controlled by the intelligent automation device 1 and it can be exploited by the control application in the interconnection device 2 an in the intelligent automation device 1 to improve its performance. The interconnection device 2 can host any kind of service which can be leveraged by the automation application to improve the performance.

It is observed that the execution of the tasks for the distributed application implemented in the automation system 100 are prioritized with respect to the tasks for the hosted services. This approach prevents that the services can negatively affect the real time performances of the automation tasks.

Particularly, it is observed that the interconnection device 2 can be a software module integrated in one of the service-oriented devices 16.

### Example of a conversion representation module 12

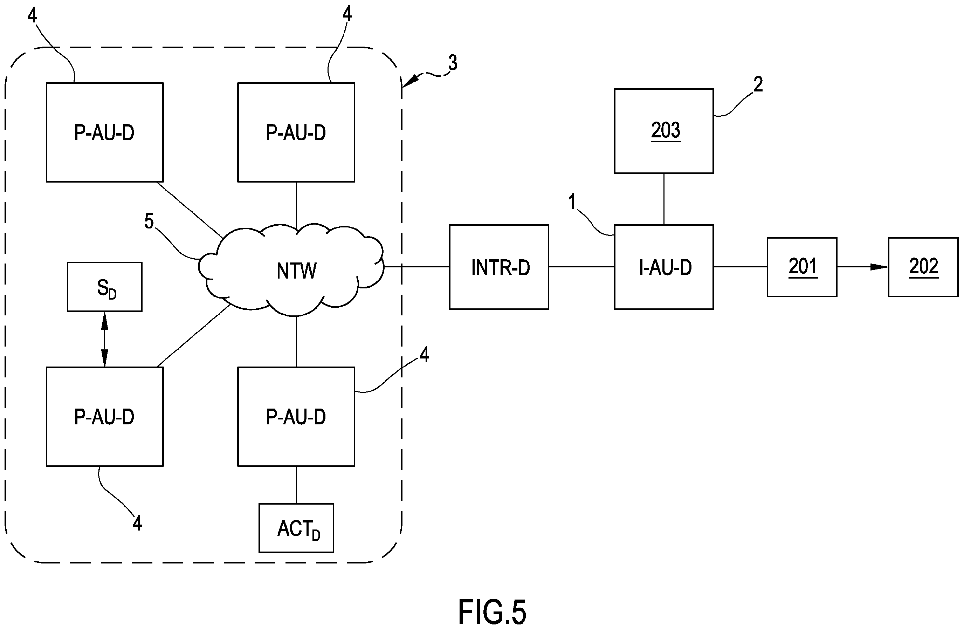

With reference to an example, schematically represented in Fig. 5, referring to an exemplary control application, some aspects of the conversion representation module 12 are further described.

The intelligent automation device 1 of Fig. 5 is connected to a first actuator, which is an inverter 201, driving a second actuator comprising a motor of a fan 202. The inverter 201 is configured to drive the motor of the fan 202 with a speed proportional to its input value (an electrical current, 4-20mA), with a linear trend from 0 to 500 rpm.

The intelligent automation device 1 is also connected (via input/output digital board) to a temperature sensor 203.

The intelligent automation device 1 is configured to monitor the status of the temperature sensor 203 and command the start/stop of the motor of the fan 202. The intelligent automation device 1 is configured to execute a program cycle every 20 ms.

The intelligent automation device 1 is configured to:
- save as internal variable "TEMPERATURE", the temperature value provided by the sensor 203 at each cycle;
- monitor the value of an internal variable "ACTIVATE" of Boolean, at each cycle;
- monitor the value of an internal variable "SPEED" (integer type) representing the fan speed, at each cycle;
- updating a value of an analogic output (electrical current) driving the inverter 201 with a value computed as follows:
   - If "ACTIVATE" = FALSE, then the output current is 4 mA;
   - If "ACTIVATE" = TRUE and "SPEED" < 0, then the output current is 4 mA;
   - If "ACTIVATE" = TRUE and "SPEED" > 100, then the output current is 20 mA;
   - If "ACTIVATE" = TRUE and 0<="SPEED" <=100, then the output current is [4 + "SPEED" x (20-4)/100] mA.

In accordance with this example, the intelligent automation device 1 is configured to expose some of its variables, such as:
- "TEMPERATURE", Read-only, 16 bit, address 30100;
- "ACTIVATE", Read-write; 1 bit address 00102;
- "SPEED", read-write, 16 bits, address 40106.

According to the example, the conversion representation module 12 (Fig. 4) is configured as a SIFB (Service Interface Function Block) of a standard IEC-61499 and represents the software interface of the intelligent automation device 1. Particularly, the conversion representation module 12 is configured as indicated below:
- an input event "updSpeed";
- an input event "updActivate";
- an input datum "speed", type REAL, assigned to the event "updSpeed";
- an input datum "activate", type BOOL, assigned to the event "updActivate";
- an output event "updTemperature";
- an output datum "temperature", di tipo REAL, assigned to the event "updTemperature".

Moreover, the conversion representation module 12 associates to the input and output variable values corresponding attributes as indicated herein below.

The following attributes are associated to the input datum "speed":
- description: "speed is the speed of the motor";
- unit of measurement: "rpm"
- minimum value: 0.0
- maximum value: 500.0
- value type: integer value 16 bit

The following attributes are associated to the input datum "activate":
- description: "activate is the variable enabling the motor operation";
- Value type: Boolean value.

The following attributes are associated to the output datum "temperature":
- description: "temperature is the temperature value of the pumping system"
- unit of measurement: "0.1 °C"
- minimum value: 1000.0
- maximum value: 20000.00;
- "value type: integer value 16 bit

The exemplary above indicated content of the conversion representation module 12 is, preferably, exported in the file 13 represented in FIG. 4 (e.g. a XML file) which can be imported in the software development tool 7 so allowing the utilization of the content of the conversion representation module 12 to the distributed automation system 3.

It is observed that the term "module" is generally employed in the present description to identify a software component, a hardware component or a component having both software and hardware parts.

The above described interconnection device, system and method provide for several advantages over the known techniques.

Particularly, the implemented exchange of variable values managed by the interconnection device 2 allows integrating intelligent automation devices (which can be legacy PLCs) in a distribute control system without the need of replacing it with event-based device.

The described representation of the software interface of the intelligent automation device (provided by the representation conversion module 12) enables to develop a control application for distributed systems also including the intelligent automation device 1.

If the software interface of the intelligent automation device 1 is modified, and the correspondent conversion representation module 12 is updated, than the representation of that interface in the software development environment for distributed systems reflects the evolution of the interface of the intelligent automation device 1. The development of the control application is less prone to errors due to the additional information associated with each quantity of such interface.

Part of the control application developed for the distributed system can be allocated to the interconnection device 2 which, together with the intelligent automation device, can be considered as a single advanced node of the distributed control system 3.

Moreover, by means of the service-oriented interface module 17 it is possible to implement flexible control applications. When appropriate services are implemented, any system connected to the same ICT network 15 of the interconnection device 2 can potentially access to the data it exposes (e.g. measured values provided by sensors connected to the intelligent automation device 1).•

The interconnection device 2 can be configured such as any system connected to the same ICT network 15 can potentially interact with the logic algorithms embedded in the automation part, providing inputs to that logic application.

It is noticed that, advantageously, the service-oriented interface module 17 allows a full integration of the intelligent automation device 1 (one or more than one) in distributed control applications:
- the intelligent automation devices 1 can be governed by external applications interfaced through the network 15 (internet / cloud);
- supervisory logics can be implemented leveraging the service interface, instead of implementing those logics in the automation software. This makes possible to modify the overall software application behavior without the need to modify the configuration of the interconnection device 2 or of the intelligent automation device 1;
- through the service-oriented interface module 17 it is possible to implement distributed control applications involving both system supporting the distributed control software natively as well as system supporting the Software Oriented Interface connectivity.

## Claims

1. An automation system (100) comprising:
at least one intelligent automation device (1) configured to operate according to a cycle-based approach;
a distributed control system (3) comprising a plurality of programmable automation devices (4) configured to operate according to an event-based approach;
an interconnection device (2) connected between the distributed control system (3) and the at least one intelligent automation device (1), the interconnection device (2) being configured to:
store first variable values (V1) provided by the intelligent automation device (1) and second variable values (V2) provided by the distributed control system (3) ;
provide an event detection signal (OEV_{SIG}) to the distributed control system (3) if a value change is determined in said first variable values (VI);
cyclically read said second variables values (V2) and send to the intelligent automation device (1) updated values (V2_{U}) of the second variables values (V2) .

2. The automation system (100) of claim 1, wherein the interconnection device (2) is configured to cyclically read the stored first variable values (V1) to detect said value change and provide event detection signal (OEV_{SIG}).

3. The automation system (100) of claim 1, wherein the interconnection device (2) further comprises:
a conversion representation module (12) representing a software interface (SI) exposed by the at least one intelligent automation device (1) and providing a converted software interface (CSI) which is expressed according to a formalism employed by the distributed control system (3).

4. The automation system (100) of claim 3, wherein the conversion representation module (12) contains a description of the first variables (V1) associated with the at least one intelligent automation device (1) and specifying: data type of the first variables and explicit or implicit digital representation associated to said data type.

5. The automation system (100) of claim 4, wherein said description of the first variables (V1) further specifies at least one of the following information: an identification value, a text name, a measure unit, a scale factor, a min or max range value, a comment, a semantic information describing characteristics of an apparatus to be controlled by the automation system, xml structured data.

6. The automation system (100) of claim 1, wherein the automation system includes a software development tool (7) structured to configure control applications in said plurality of programmable automation devices (4) and, by means of the interconnection device (2), in said at least one intelligent automation device (1).

7. The automation system (100) of claim 1, wherein the interconnection device (2) further includes a service-oriented interface module (17) configured to enable a hosting of services to:
respond to external requests coming from an ICT network (15) connected to the automation system (100);
interact with a control logic implemented within the distributed control system (3).

8. The automation system (100) of claim 1, wherein the at least one intelligent automation device (1) and/or at least one of the plurality of the programmable automation device (4) is configured to control a corresponding controlled device belonging to the following group: a sensor (S_{N}; S_{D}) and an actuator (ACT_{N}; ACT_{D}).

9. An interconnection device (2) comprising:
at least a communication module (9, 10) connectable to:
at least one intelligent automation device (1) configured to operate according to a cycle-based approach; and
a distributed control system (3) comprising a plurality of programmable automation devices (4) configured to operate according to an event-based approach;
wherein the interconnection device (2) is configured to:
store first variable values (V1) provided by the intelligent automation device (1) and second variable values (V2) provided by the distributed control system (3) ;
provide an event detection signal (OEV_{SIG}) to the distributed control system (3) if a value change is determined in said first variable values (VI);
cyclically read said second variables values (V2) and send to the intelligent automation device (1) updated values (V2_{U}) of the second variables values (V2) .

10. An automation method (100) comprising:
configuring at least one intelligent automation device (1) to operate according to a cycle-based approach;
configuring a distributed control system (3) comprising a plurality of programmable automation devices (4) to operate according to an event-based approach;
interconnecting the distributed control system (3) and the at least one intelligent automation device (1); wherein interconnecting comprises:
storing first variable values (V1) provided by the intelligent automation device (1) and second variable values (V2) provided by the distributed control system (3) ;
providing an event detection signal (OEV_{SIG}) to the distributed control system (3) if a value change is determined in said first variable values (V1);
cyclically reading said second variables values (V2) and send to the intelligent automation device (1) updated values (V2_{U}) of the second variables values (V2) .
